# EUROPÄISCHE PATENTSCHRIFT

(11) **EP 0 402 799 B1**
(45) Veröffentlichungstag und Bekanntmachung des Hinweises auf die Patenterteilung: **25.08.1993**
(21) Anmeldenummer: 90110927.2
(22) Anmeldetag: 09.06.1990
(51) Int. Cl.: A01G 23/087, A01G 23/08, A01G 23/089

(54) **Holzabschervorrichtung**
Wood shearing device
Dispositif pour cisailler du bois

(30) Priorität: 13.06.1989 DE 3919193
(43) Veröffentlichungstag der Anmeldung: 19.12.1990
(73) Patentinhaber: Markgraf, Karl, D-38459 Bahrdorf (DE)
(72) Erfinder: Müller, Ewald, O.T. Papenrode, D-3181 Gr. Twülpstedt 4 (DE)
(74) Vertreter: Gramm, Werner, Prof., Dipl.-Ing.

(56) Entgegenhaltungen:
- CA-A- 1 117 850
- DE-A- 2 411 542
- DE-A- 2 502 581
- DE-B- 2 301 103
- DE-C- 2 430 020
- FR-A- 1 560 041
- US-A- 4 301 845

## Beschreibung

Die Erfindung betrifft eine Holzabschervorrichtung, insbesondere zum Fällen von Bäumen, bestehend aus einem Abscheraggregat, das an dem freien Ende eines Gelenk- oder Teleskopauslegers eines Traktors oder einer Universalmaschine anlenkbar ist und eine in das Holz eindringende Scherschneide aufweist, an der ein Scherantrieb angreift.

Eine derartige Ausführungsform läßt sich beispielsweise der deutschen Auslegeschrift 23 01 103 entnehmen. Vergleichbare Ausführungsformen zeigen auch die deutsche Patentschrift 24 30 020, die deutsche Patentschrift 26 52 990, die deutsche Auslegeschrift 24 11 353, die deutsche Auslegeschrift 24 11 542, die deutsche Auslegeschrift 25 02 581 und die deutsche Patentschrift 27 31 524.

Aus dem Dokument FR-A-1 560 041 ist eine Holzabschervorrichtung bekannt, die seitlich an der Hubgabel eines Spezialfahrzeugs befestigt ist. Das Abscheraggregat ist durch einen ersten an ihm angreifenden Antrieb um eine horizontale Querachse in seiner Neigung gegenüber dem Boden verstellbar und durch einen zweiten Antrieb um eine horizontale Längsachse verschwenkbar. Eine Verschwenkung des Abscheraggregates um eine lotrechte Verschwenkachse ist nur indirekt dadurch möglich, daß das mit der Vorderachse bestückte Frontteil des Spezialfahrzeugs um eine lotrechte Achse verschwenkbar ist gegenüber dem rückwärtigen Fahrzeugteil. Das Abscheraggregat weist eine zum Umfassen eines Baumstammes dienende Grundplatte auf, deren stirnseitig offene, den Baumstamm aufnehmende Ausnehmung durch eine etwa 180° umschließende Baumanlagefläche begrenzt ist. Eine Fällklinge ist durch den an ihr angreifenden Scherantrieb in einer Ebene parallel zu der der Grundplatte und senkrecht zu der Baumstammlängsachse zwischen einer außerhalb der genannten Ausnehmung liegenden Ausgangsstellung und einer diese Ausnehmung zumindest weitgehend übergreifen Endstellung hin und her verschiebbar.

Die Druckschrift US-A-4 301 845 offenbart für eine Holzabschervorrichtung einen Fallkerbschneider, der durch einen an ihm angreifenden Antrieb etwa innerhalb der Wirkebene der Fällklinge und angenähert senkrecht zu deren Verstellrichtung über einen schmalen der Endstellung der Fällklinge benachbarten Abschnitt der genannten Ausnehmung verschiebbar ist. Der Fallkerbschneider besteht aus einem sägeartigen Räumwerkzeug, das über einen Kolbenantrieb weitgehend in Längsrichtung gezogen und dabei über einen Exzenter gegen den Baumstamm gedrückt wird.

Der Erfindung liegt die Aufgabe zugrunde, eine besonders sicher arbeitende Holzabschervorrichtung zu entwickeln, die sich nahezu überall einsetzen läßt.

Diese Aufgabe wird gemäß der Erfindung durch folgende Merkmale des Abscheraggregates gelöst:
a) Das Abscheraggregat ist durch einen ersten an ihm angreifenden Antrieb um eine horizontale Querachse in seiner Neigung gegenüber dem Boden verstellbar, durch einen zweiten Antrieb um eine horizontale Längsachse verschwenkbar und durch einen dritten Antrieb um eine lotrechte Verschwenkachse verschwenkbar;
b) das Abscheraggregat weist eine hakenförmig ausgebildete, zum Umfassen eines Baumstammes dienende Grundplatte auf, deren seitlich offene, den Baumstamm aufnehmende Ausnehmung durch eine mehr als 180° umschließende Baumanlagefläche begrenzt ist;
c) eine Fällklinge ist durch den an ihr angreifenden Scherantrieb in einer Ebene parallel zu der der Grundplatte und senkrecht zu der Baumstammlängsachse zwischen einer außerhalb der genannten Ausnehmung liegenden Ausgangsstellung und einer diese Ausnehmung zumindest weitgehend übergreifenden Endstellung hin und her verschiebbar;
d) ein Fallkerbschneider ist durch einen an ihm angreifenden Antrieb etwa innerhalb der Verschiebeebene der Fällklinge und angenähert senkrecht zu deren Verschieberichtung über einen schmalen, der Endstellung der Fällklinge benachbarten Abschnitt der genannten Ausnehmung verschiebbar.

Erfindungsgemäß wird dadurch u.a. erreicht, daß beim Fällen der Baum auf einem Umfang von mehr als 180° umfaßt wird. Zur eindeutigen Bestimmung der Fallrichtung des Baumes wird aus diesem zuvor ein Fallkerb herausgeschnitten. Anschließend läßt sich dann der Baumstanm durch die druckgetriebene Fällklinge abtrennen. Die Verdrehmöglichkeit um eine horizontale Längsachse gibt die Möglichkeit, das Abscheraggregat hochkantig zwischen zwei Bäumen hindurchzuführen und erst anschließend in die horizontale Schneidestellung zu drehen. Die neue Vorrichtung läßt sich auch von einem Gewässer aus, z.B. von einem schwimmenden Ponton, einem Lastkahn o.dergl. einsetzen, so daß sich Uferbewuchs beaufschlagen läßt. Das Abscheraggregat läßt sich auch um einzelne Bäume oder Baumteile schwingen oder zwischen strauchähnlichen Zwieselwüchsen hindurchführen.

Insbesondere zum Fällen stärkerer Bäume ist es vorteilhaft, wenn die Fällklinge auf ihrem der Schneide gegenüberliegenden Ende in einen Fällkeil übergeht. Dabei kann der Fällkeil zugleich als Klingenhalter ausgebildet sein. Mit dem erfindungsgemäßen Aggregat lassen sich daher hinsichtlich der Merkmale Fallkerb, Fällschnitt, Bruchleiste sowie Fällkeil maßgebliche Bestimmungen der Unfallverhütungsvorschrift "Baumfällen" mühelos einhalten.

Der Abschervorgang wird erleichtert bzw. verbessert, wenn der von dem Fallkerbschneider überstrichene Abschnitt der Baumanlegefläche als passive Gegenschneide ausgebildet ist.

Um das Umfassen eines zu fällenden Baumstammes zu erleichtern, ist es vorteilhaft, wenn sich die seitliche Öffnung der genannten Ausnehmung nach außen konisch erweitert.

Das erfindungsgemäße Aggregat läßt sich auch zum Rücken von Ernteholz verwenden, wenn an der Grundplatte ein ihrem hakenförmigen Endteil gegenüberliegender Klemmarm angelenkt ist, der durch einen Antrieb zangenartig in den Bereich der genannten Ausnehmung verschwenkbar ist.

Der Antrieb des Fallkerbschneiders erfolgt vorzugsweise über eine Gewindespindel oder einen Hydraulik-Teleskopzylinder.

Aus Gründen des Umweltschutzes ist es vorteilhaft, wenn wasserhydraulische Antriebe verwendet werden.

In der Zeichnung ist eine als Beispiel dienende Ausführungsform der Erfindung schematisch dargestellt. Es zeigen:
- Figuren 1 und 2: drei verschiedene Einsatzmöglichkeiten für eine erfindungsgemäße Holzabschervorrichtung;
- Figur 3: in vergrößertem Maßstab in Seitenansicht ein einen Baumstamm umgreifendes Abscheraggregat;
- Figur 4: das Abscheraggregat gemäß Figur 3 in Draufsicht und
- Figur 5: eine Unteransicht des Abscheraggregates gemäß Figur 3.

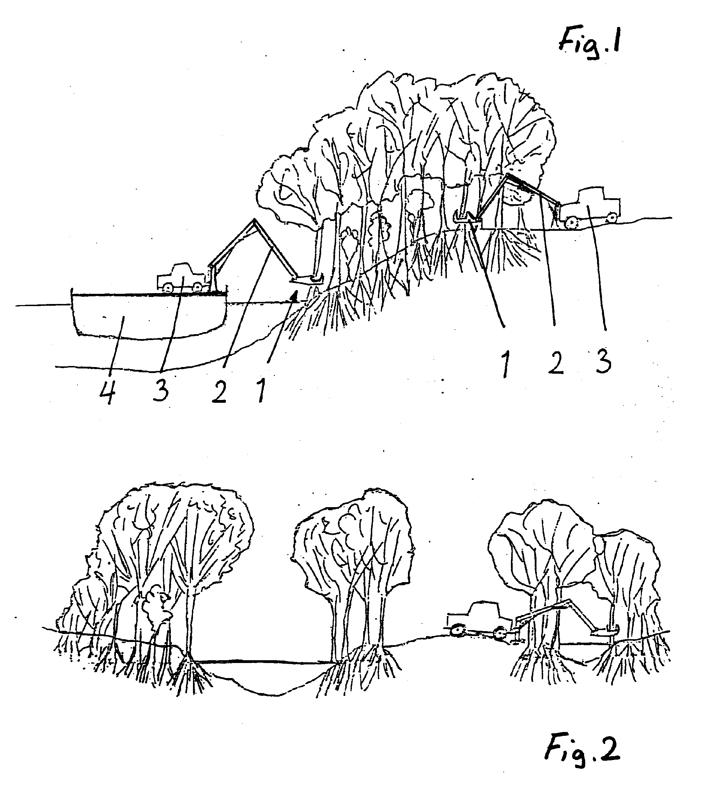

Ein Abscheraggregat 1 gemäß der Erfindung ist, wie die Figuren 1 und 2 erkennen lassen, an dem freien Ende eines Gelenk- oder Teleskopauslegers 2 eines Traktors 3 oder einer sonstigen Universalmaschine angelenkt. In Figur 1 zeigt die linke Darstellung den Einsatz von einem schwimmenden Ponton 4 bzw. einem Lastkahn, von dem aus der sich auf Böschungen an Gewässern erster Ordnung befindliche Baumbestand beaufschlagen läßt. Die rechte Darstellung in Figur 1 zeigt die Möglichkeit zum Baumfällen im Bereich des Baumbewuchses auf Uferzonen im Agrargebiet. Figur 2 läßt den Arbeitseinsatz von einem mit seitlichen Baumbeständen versehenen Wirtschaftsweg erkennen, wobei sich auch Bäume jenseits eines Gewässers zweiter oder dritter Ordnung fällen lassen.

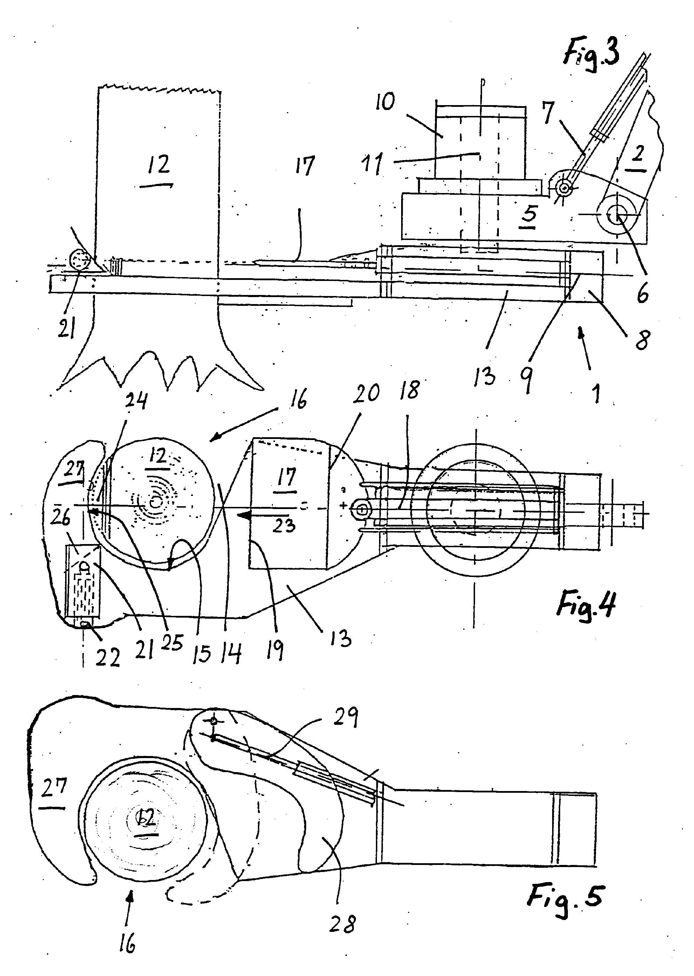

Das in den Figuren 3 bis 5 dargestellte Abscheraggregat 1 weist an seinem einen Ende einen Drehkopf 5 auf, der über eine horizontale Querachse 6 an dem freien Ende des Auslegers 2 angelenkt ist und diesem gegenüber um die Querachse 6 in seiner Neigung gegenüber dem Boden verschwenkbar ist. Hierfür ist ein erster Antrieb 7 vorgesehen, der an dem Drehkopf 5 angreift. Das Abscheraggregat 1 ist durch einen zweiten Antrieb 8 um eine horizontale Längsachse 9 verschwenkbar z.B. um 90° aus der in Figur 1 dargestellten Position, um dadurch in aufgerichteter Stellung auch durch dicht nebeneinander stehende Bäume oder Sträucher durchgeführt werden zu können. Der Drehkopf 5 und damit das Abscheraggregat 1 lassen sich durch einen dritten Antrieb 10 um eine lotrechte Verschwenkachse 11 verschwenken. Während der erste Antrieb 7 ein Zylinder-Kolben-Antrieb sein kann, werden der zweite und dritte Antrieb 8,10 jeweils durch einen Schwenkmotor gebildet.

Das Abscheraggregat 1 weist ferner eine hakenförmig ausgebildete, zum Umfassen eines Baumstammes 12 dienende Grundplatte 13 auf, deren seitlich offene, den Baumstanm 12 aufnehmende Ausnehmung 14 durch eine mehr als 180° umschließende Baumanlagefläche 15 begrenzt ist. Die seitliche Öffnung 16 der Ausnehmung 14 erweitert sich nach außen konisch.

Auf der in Figur 1 oben liegenden Seite der Grundplatte 13 ist eine Fällklinge 17 verschiebbar gelagert, die durch einen an ihr angreifenden Scherantrieb 18 in einer Ebene parallel zu der der Grundplatte 13 und senkrecht zu der Baumstammlängsachse zwischen einer außerhalb der genannten Ausnehmung 14 liegenden Ausgangsstellung (siehe Figur 4) und einer diese Ausnehmung 14 zumindest weitgehend übergreifenden Endstellung hin und her verschiebbar ist. Die Fällklinge 17 geht auf ihrem der Schneide 19 gegenüberliegenden Ende in einen Fällkeil 20 über, der zugleich als Klingenhalter ausgebildet ist.

Ein Fallkerbschneider 21 ist durch einen an ihm angreifenden Antrieb 22 etwa innerhalb der Verschiebeebene der Fällklinge 17 und angenähert senkrecht zu deren Verschieberichtung 23 über einen schmalen, der Endstellung der Fällklinge 17 benachbarten Abschnitt 24 der genannten Ausnehmung 14 verschiebbar (siehe Figur 4). Dabei ist der von dem Fallkerbschneider 21 überstrichene Abschnitt 25 der Baumanlagefläche 15 als passive Gegenschneide ausgebildet. In Figur 4 ist ferner angedeutet, daß der Fallkerbschneider 21 mit einer Spanfördereinrichtung 26 ausgestattet ist.

Auf der Unterseite der Grundplatte 13 ist ein ihrem hakenförmigen Endteil 27 gegenüberliegender Klemmarm 28 angelenkt, der durch einen Antrieb 29 zangenartig in den Bereich der genannten Ausnehmung 14 in die in Figur 5 gestrichelt eingezeichnete Position verschwenkbar ist, in der der Klemmarm 28 die seitliche Öffnung 16 der Ausnehmung 14 zumindest teilweise verschließt und dadurch den in der Ausnehmung 14 befindlichen Baumstamm 12 festklemmt.

Der Scherantrieb 18 kann ein Hydraulikylinder sein, der zugleich auch die Drehachse (horizontale Längsachse 9) bilden kann. Drehkopf 5 und Grundplatte 13 können durch Flansche zusammengeschraubt sein.

## Patentansprüche

1. Holzabschervorrichtung, insbesondere zum Fällen von Bäumen, bestehend aus einem Abscheraggregat (1), das an dem freien Ende eines Gelenk- oder Teleskopauslegers (2) eines Traktors (3) oder einer Universalmaschine anlenkbar ist und eine in das Holz eindringende Scherschneide (19) aufweist, an der ein Scherantrieb (18) angreift, **gekennzeichnet** durch folgende Merkmale des Abscheraggregates:
a) Das Abscheraggregat (1) ist durch einen ersten an ihm angreifenden Antrieb (7) um eine horizontale Querachse (6) in seiner Neigung gegenüber dem Boden verstellbar, durch einen zweiten Antrieb (8) um eine horizontale Längsachse (9) verschwenkbar und durch einen dritten Antrieb (10) um eine lotrechte Verschwenkachse (11) verschwenkbar;
b) das Abscheraggregat (1) weist eine hakenförmig ausgebildete, zum Umfassen eines Baumstammes (12) dienende Grundplatte (13) auf, deren seitlich offene, den Baumstamm (12) aufnehmende Ausnehmung (14) durch eine mehr als 180° umschließende Baumanlagefläche (15) begrenzt ist;
c) eine Fällklinge (17) ist durch den an ihr angreifenden Scherantrieb (18) in einer Ebene parallel zu der der Grundplatte (13) und senkrecht zu der Baumstammlängsachse zwischen einer außerhalb der genannten Ausnehmung (14) liegenden Ausgangsstellung und einer diese Ausnehmung (14) zumindest weitgehend übergreifenden Endstellung hin und her verschiebbar;
d) ein Fallkerbschneider (21) ist durch einen an ihm angreifenden Antrieb (22) etwa innerhalb der Verschiebeebene der Fällklinge (17) und angenähert senkrecht zu deren Verschieberichtung (23) über einen schmalen, der Endstellung der Fällklinge (17) benachbarten Abschnitt (24) der genannten Ausnehmung (14) verschiebbar.

2. Holzabschervorrichtung nach Anspruch 1, dadurch gekennzeichnet, daß Fällklinge (17) und Fallkerbschneider (21) auf der Oberseite der sich zum Baumstammfällen in einer angenähert horizontalen Ebene befindlichen Grundplatte (13) angeordnet sind.

3. Holzabschervorrichtung nach Anspruch 1 oder 2, dadurch gekennzeichnet, daß die Fällklinge (17) auf ihrem der Schneide (19) gegenüberliegenden Ende in einen Fällkeil (20) übergeht.

4. Holzabschervorrichtung nach Anspruch 3, dadurch gekennzeichnet, daß der Fällkeil (20) zugleich als Klingenhalter ausgebildet ist.

5. Holzabschervorrichtung nach einem der vorhergehenden Ansprüche, dadurch gekennzeichnet, daß der Fallkerbschneider (21) mit einer Spanfördereinrichtung (26) ausgestattet ist.

6. Holzabschervorrichtung nach einem der vorhergehenden Ansprüche, dadurch gekennzeichnet, daß der von dem Fallkerbschneider (21) überstrichene Abschnitt (25) der Baumanlegefläche (15) als passive Gegenschneide ausgebildet ist.

7. Holzabschervorrichtung nach einem der vorhergehenden Ansprüche, dadurch gekennzeichnet, daß sich die seitliche Öffnung (16) der genannten Ausnehmung (14) nach außen konisch erweitert.

8. Holzabschervorrichtung nach einem der vorhergehenden Ansprüche, dadurch gekennzeichnet, daß an der Grundplatte (13) ein ihrem hakenförmigen Endteil (27) gegenüberliegender Klemmarm (28) angelenkt ist, der durch einen Antrieb (29) zangenartig in den Bereich der genannten Ausnehmung (14) verschwenkbar ist.

9. Holzabschervorrichtung nach Anspruch 8, dadurch gekennzeichnet. daß der Klemmarm (28) auf der Unterseite der Grundplatte (13) angeordnet ist.

10. Holzabschervorrichtung nach einem der vorhergehenden Ansprüche, gekennzeichnet durch öl- oder wasserhydraulische Antriebe (7,8,10,18,22,29).

## Claims

1. Timber shearing apparatus, in particular for felling trees, comprising a shearing unit (1) which can be coupled to the free end of a jointed or telescopic bracket (2) of a tractor (3) or a universal machine, and has a shearing cutter (19) which penetrates into the timber and on which there acts a shearing drive (18), characterized by the following features of the shearing unit:
a) the shearing unit (1) can be pivoted by a first drive (7) acting thereon about a horizontal transverse axis (6) in its inclination with respect to the ground, can be pivoted by a second drive (8) about a-horizontal longitudinal axis (9) and can be pivoted by a third drive (10) about a vertical pivot axis (11);
b) the shearing unit (1) has a hook-shaped base plate (13) which serves to grip around a tree trunk (12) and whereof the laterally open cutout (14) receiving the tree trunk (12) is delimited by a tree bearing surface (15) enclosing more than 180°;
c) a felling blade (17) can be displaced back and forth, by means of the shearing drive (18) acting thereon, in a plane parallel to that of the base plate (13) and perpendicular to the tree trunk longitudinal axis between a starting position lying outside the said cutout (14) and an end position reaching at least substantially beyond this cutout (14);
d) a felling notch cutting means (21) can be displaced, by means of a drive (22) acting thereon, approximately within the displacement plane of the felling blade (17) and approximately perpendicular to the displacement direction (23) thereof by way of a narrow section (24) of the said cutout (14) which is adjacent to the end position of the felling blade (17).

2. Timber shearing apparatus according to Claim 1, characterized in that the felling blade (17) and the felling notch cutting means (21) are arranged on the upper side of the base plate (13) which, for felling tree trunks, is located in an approximately horizontal plane.

3. Timber shearing apparatus according to Claim 1 or 2, characterized in that the felling blade (17) merges into a felling wedge (20) at its end opposite the cutter (19).

4. Timber shearing apparatus according to Claim 3, characterized in that the felling wedge (20) is at the same time constructed as a blade holder.

5. Timber shearing apparatus according to one of the preceding claims, characterized in that the felling notch cutting means (21) is equipped with a chip-conveying device (26).

6. Timber shearing apparatus according to one of the preceding claims, characterized in that the section (25) of the tree bearing surface (15) over which the felling notch cutting means (21) sweeps is constructed as a passive countercutter.

7. Timber shearing apparatus according to one of the preceding claims, characterized in that the lateral opening (16) of the said cutout (14) widens conically outwards.

8. Timber shearing apparatus according to one of the preceding claims, characterized in that there is coupled to the base plate (13) a clamping arm (28) which is opposite its hook-shaped end part (27) and which can be pivoted by means of a drive (29) into the region of the said cutout (14) in the manner of tongs.

9. Timber shearing apparatus according to Claim 8, characterized in that the clamping arm (28) is arranged on the underside of the base plate (13).

10. Timber shearing apparatus according to one of the preceding claims, characterized by drives (7, 8, 10, 18, 22, 29) which operate hydraulically with oil or water.

## Revendications

1. Dispositif pour tronçonner du bois, en particulier destiné à abattre des arbres, constitué d'un mécanisme de tronçonnage (1) qui peut être articulé à l'extrémité libre d'une flèche (2) articulée ou télescopique d'un tracteur (3) ou d'une machine universelle et qui présente une lame de tronçonnage (19) pénétrant dans le bois, sur laquelle agit un moteur (18), caractérisé par les particularités suivantes du mécanisme de tronçonnage:
a) le mécanisme de tronçonnage (1) est réglable dans son inclinaison autour d'un axe transversal horizontal (6) par rapport au sol, par un premier moteur (7) agissant sur lui, pivotable autour d'un axe longitudinal horizontal (9) par un deuxième moteur (8) et pivotable autour d'un axe de pivotement vertical (11) par un troisième moteur (10);
b) le mécanisme de tronçonnage (1) présente une plaque de base (13) réalisée en forme de crochet destinée à saisir un tronc d'arbre (12) et dont l'évidement (14), ouvert latéralement, recevant le tronc d'arbre (12) est délimité par une face (15) d'application contre l'arbre et formant un angle intérieur supérieur à 180°;
c) une lame d'abattage (17) est mobile en un mouvement de va-et-vient, par un moteur de tronçonnage (18) agissant sur elle, dans un plan parallèle à celui de la plaque de base (13) et perpendiculaire à l'axe longitudinal du tronc d'arbre entre une position initiale située à l'extérieur dudit évidement (14) et une position d'extrémité faisant saillie, au moins dans une large mesure, dudit évidement (14);
d) une lame d'entaille (21) de la fente d'abattage est mobile, au moyen d'un moteur (22) agissant sur lui, sensiblement à l'intérieur du plan de déplacement de la lame (17) et sensiblement perpendiculairement à sa direction de déplacement (23), sur une section étroite (24) dudit évidement (14) voisine de la position d'extrémité de la lame (17).

2. Dispositif pour tronçonner du bois selon la revendication 1, caractérisé en ce que la lame d'abattage (17) et la lame d'entaille (21) sont disposées sur le côté supérieur de la plaque de base (13) se trouvant dans un plan sensiblement horizontal pour l'abattage des troncs d'arbre.

3. Dispositif pour tronçonner du bois selon l'une quelconque des revendications 1 ou 2, caractérisé en ce que la lame d'abattage (17) se transforme sur son extrémité opposée au tranchant (19) en un cône d'abattage (20).

4. Dispositif pour tronçonner du bois selon la revendication 3, caractérisé en ce que le cône d'abattage (20) est réalisé de manière à servir en même temps de porte-lame.

5. Dispositif pour tronçonner du bois selon l'une quelconque des revendications précédentes, caractérisé en ce que la lame d'entaille (21) est équipée d'un dispositif d'évacuation des copeaux.

6. Dispositif pour tronçonner du bois selon l'une quelconque des revendications précédentes, caractérisé en ce que la section (25) de la face (15) d'application contre l'arbre, balayée par la lame d'entaille (21), est constitué sous la forme d'une contre-lame passive.

7. Dispositif pour tronçonner du bois selon l'une quelconque des revendications précédentes, caractérisé en ce que l'ouverture latérale (16) dudit évidement (14) s'élargit vers l'extérieur en forme de cône.

8. Dispositif pour tronçonner du bois selon l'une quelconque des revendications précédentes, caractérisé en ce que, sur la plaque de base (13), opposée à sa partie d'extrémité en forme de crochet (27), est articulé un bras de serrage (28), lequel, au moyen d'un moteur (29), peut être basculé à la manière d'une pince, dans la zone dudit évidement (14).

9. Dispositif pour tronçonner du bois selon la revendication 8, caractérisé en ce que le bras de serrage (28) est disposé sur la face inférieure de la plaque de base (13).

10. Dispositif pour tronçonner du bois selon l'une quelconque des revendications précédentes, caractérisé par la présence de moteurs oléodynamiques ou hydrauliques (7, 8, 10, 18, 22, 29).
